Europäisches Patentamt

European Patent Office

Office européen des brevets

(11) Publication number: 0 440 904 A1

# EUROPEAN PATENT APPLICATION

(21) Application number: 90122845.2

(22) Date of filing: 29.11.90

(51) Int. Cl.⁵: G05B 19/405

(30) Priority: 09.02.90 JP 30079/90

(43) Date of publication of application:
14.08.91 Bulletin 91/33

(84) Designated Contracting States:
CH DE LI

(71) Applicant: MITSUBISHI DENKI KABUSHIKI
KAISHA
2-3, Marunouchi 2-chome Chiyoda-ku
Tokyo 100(JP)

(72) Inventor: Kurachi, Takayoshi, c/o Mitsubishi
Denki
Mekatoronikusu Sofu., KK., 1-14 Yadaminami
5-chome
Higashi-ku, Nagoya-shi, Aichi(JP)
Inventor: Sumita, Mitsutaka, c/o Mitsubishi
Denki
Mekatoronikusu Sofu., KK., 1-14 Yadaminami
5-chome
Higashi-ku, Nagoya-shi, Aichi(JP)

(74) Representative: Lehn, Werner, Dipl.-Ing. et al
Hoffmann, Eitle & Partner Patentanwälte
Arabellastrasse 4
W-8000 München 81(DE)

(54) Method and apparatus for displaying scaled representations on a CRT or other display apparatus.

(57) The invention pertains to a method of improving the readability and usefulness of displays which depict physical articles or processes at reduced or enlarged scale. According to the invention, the scale at which a given locus of points will be displayed is determined, following which a scale marker is generated to indicate the scale of the display relative to the actual size of the article or process being displayed. The size of the scale marker on the display is made variable so that the scale value will work out to a number which is easy to use, such as a number having only one non-zero digit, or only selected ones of said numbers such as 1, 2 or 5. The locus is displayed together with the scale marker, and in addition horizontal and vertical axis graduations are indicated with the size of the graduation separations being equal to the length of the scale marker. Co-ordinate values may also be displayed adjacent the graduations, and the origin of the coordinate plane can be freely set.

Fig.5

# METHOD AND APPARATUS FOR DISPLAYING SCALED REPRESENTATIONS ON A CRT OR OTHER DISPLAY APPARATUS

## BACKGROUND OF THE INVENTION

The present invention relates generally to the art of graphics displays, and particularly to methods of displaying representations of actual articles or processes on an enlarged or reduced scale. The invention is applicable to a wide range of display apparatus and displayed items but will here be described in the context of a method of displaying a machining locus of a machine tool or the like. The invention is capable of enabling an operator to simply and accurately check whether or not a predetermined machining operation is being effected in accordance with a numerical control (NC) program created for controlling the machine tool. One example of a machine tool to which the invention may be applicable is an electronic discharge machining apparatus. In such an apparatus it is desirable to display the machining path or locus by means of a CRT display device, as the workpiece itself is not viewable during machining. Display is performed according to the invention by automatically outputting the contents of the NC program, i.e., the moving locus of the electrode (electrode coordinate values corresponding to the movement locus) to represent the workpiece as machined on the basis of the NC program on the CRT display.

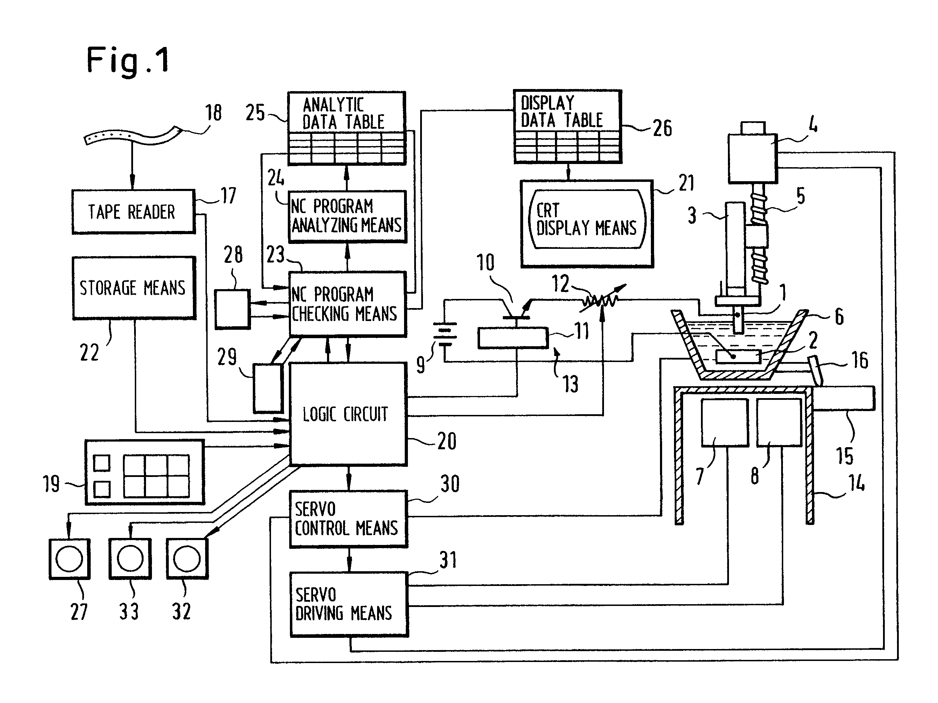

Fig. 1 is a block diagram depicting the construction of a prior art electronic discharge machining device (EDM) disclosed in Japanese Patent Publication (Kokai) No. 61-111854.

Referring to Fig. 1, a machining electrode generally designated at 1 is detachably mounted on a main shaft 3 of the EDM device so as to be positioned relative to a workpiece 2 with a predetermined spacing. The machining electrode 1 is adapted to be raised and lowered at a predetermined velocity by forward and reverse rotations of a ball screw 5 rotationally driven by a DC servo motor 4 along an axis Z. The numeral 6 denotes a processing tank, in which the workpiece 2 is held, for containing a processing liquid. The processing tank 6 is freely movable in X and Y axis directions by means of a DC servo motor 7 for the X axis and a DC servo motor 8 for the Y axis. The numeral 9 represents a DC power source. A switching transistor indicated at 10 is ON/OFF controlled by a pulse generator 11. The transistor 10 is provided to apply DC power from source 9, in the form of predetermined pulse voltages, across a gap formed between the machining electrode 1 and the workpiece 2, through a variable resistor 12. The variable resistor 12, the DC power source 9, the switching transistor 10 and the pulse generator 11 combine to constitute an electronic discharge machining power circuit 13.

The numeral 14 designates a bed for supporting the main shaft 3, the ball screw 5, the processing tank 6, the X-axis DC servo motor 7, the Y-axis DC servo motor 8 and the Z-axis DC servo motor 4, the bed 14 being fixed relative to a floor surface. A table denoted at 15 is fixed to the bed 14, and a pen mounting unit 16 is fitted to the processing tank 6.

Numeral 17 represents a tape reader for reading a machining program from an NC tape 18. In the remainder of Fig. 1, 19 is an input device used for specifying an NC program, inputting data or actuating a variety of units; 20, a logic circuit for setting the program specified by the input unit 19 or for actuating the respective units; 21, a CRT display means for displaying data set by the operator or the program specified by the operator or the tape, or outputs from the individual units; 22, a storage means for storing the NC program and, if necessary, calling the program; 23, an NC program checking means for checking the NC program set by the logic circuit 20; 24 an NC program analyzing means, started by the NC program checking means, for analyzing the NC program; 25, an analytic data table in which analytic data and parameters are set by the NC program analyzing means 24; 26 a display data table in which data converted for the CRT display means 21 is set by the NC program checking means 23 on the basis of the data set in the analytic data table 25; 27 a check start switch for inputting a signal to start the NC program check; 28, a work data setting unit for permitting the NC program being checked to input data on the workpiece to be machined; 29, a scale setting means for calculating scale values and also setting the scale on the CRT display means 21 on the basis of the workpiece data set after operating the work data setting unit 28; 30, a servo control means; 31, a servo motor driving means; 32, a machine lock switch for preventing the respective servo motors 7, 8 and 4 from being driven in accordance with the results obtained when the NC program is being analyzed by the NC program analyzing means 24 for testing, simulation or display purposes and for also hindering the flow of electric current into the power circuit 13 at this time; and 33, a start switch for transmitting a start signal when effecting machining on the basis of the NC program set by the logic circuit 20. The NC program analyzing means 24 analyzes the NC program set by the logic circuit 20 in response to a signal transmitted from the logic circuit 20 when it (20) has received a machining start signal from the start switch 33.

When the workpiece undergoes machining in the above-mentioned apparatus, as discussed above, the program on the NC tape 18 is analyzed by the NC program analyzing means 24 upon operating the start switch 33, and a programmed machining process is performed by a known method.

Before machining the workpiece 2, it is often required to confirm whether the program on the NC tape 18 is satisfactory for effecting the desired shaping or machining process.

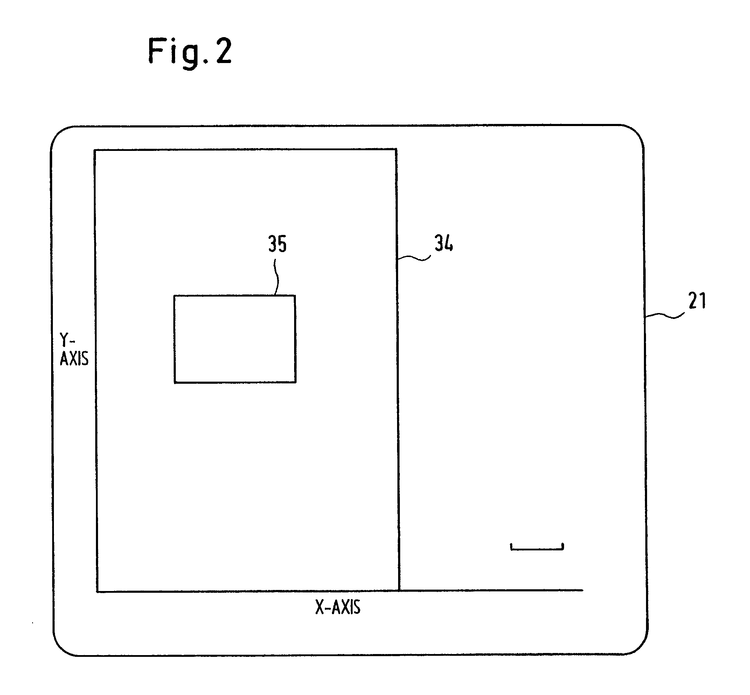

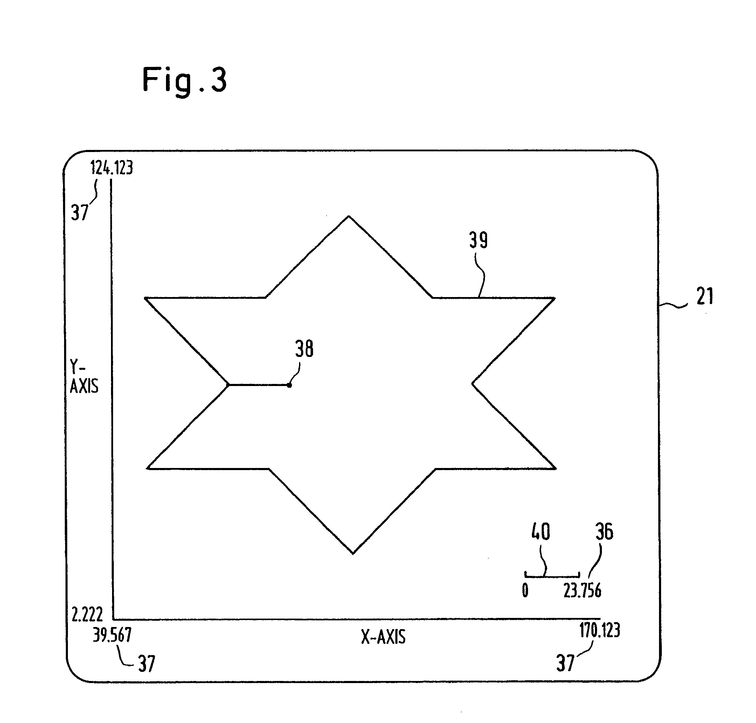

The description will next deal with the method of checking the NC program in the foregoing device, with reference to Figs. 2 to 4. Fig 2 is the representation displayed on the CRT display means 21 when one initially specifies the depictive range of the machining locus. Fig. 3 shows one example of a representation in which the NC program is depicted by the CRT display means 21. Referring to Figs. 2 and 3, the numeral 34 designates a depictive range frame; 36, a scale value determined by the scale setting means 29; 37, coordinate values in the display region; 38, a machining start point; 39, the machining locus; and 40, a fixed length scale marker.

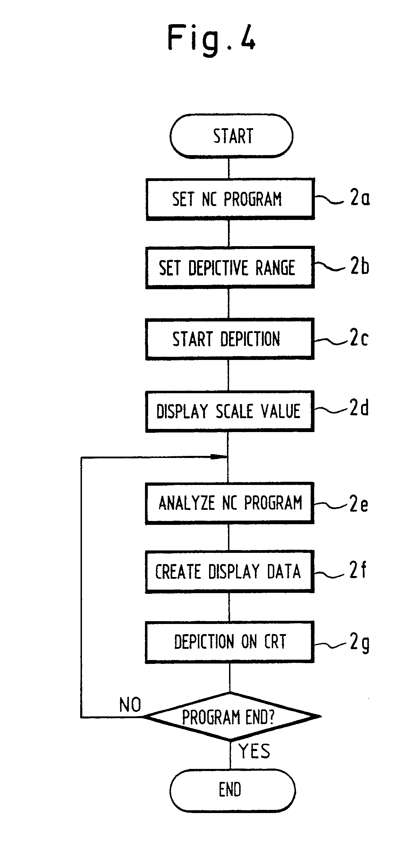

When checking the NC program using the CRT display means 21, the inspector at first sets the NC program in the logic circuit 20 (step 2a of Fig 4). the manner of program entry may vary; for instance, NC program-based entry may be used, where the program is downloaded from another source (such as the paper tape), or the NC program already in the storage means 22 may be specified. Program entry can also be effected by writing the NC program by use of the input unit 19.

Subsequently, the inspector sets the depictive range, i.e., the amount of the screen to be used for the display of the locus, in the logic circuit 20 (step 2b of Fig. 4). The manner of entering this data may also vary. Usually, a range frame 34 is displayed by depressing a key on the input unit 19. The depictive range is subsequently set by depressing another input key on the input unit 19 after the range frame 34 has been diminished/enlarged or moved vertically/laterally by operating [ + ] [-] keys or [↑] [↓] [←] [→] keys on the input unit 19. Alternatively, the range can automatically be set by analyzing the overall shape of the machining path determined by the NC program set in step 2a of Fig. 4. After entering both the NC program and the depictive range in the manners discussed above, a display start key of the input unit 19 is depressed, and immediately the NC program is automatically checked (step 2c of Fig. 4). More specifically, when pushing down the display start key, the CRT display means 21 will be caused to display a calculated scale value 36 relating the actual size of the machining path on the workpiece to the size as displayed, along with a scale marker 40 which is of constant length. The coordinate values 37 in the display region are also displayed (step 2d of Fig. 4). The actual machining trace or locus is not yet displayed.

Next, the NC program analyzing means 24 is started, and NC program analytic data for one block are created. After setting the analytic data in the analytic data table 25, a signal indicating the completion of analysis is inputted to the NC program checking means 23 (step 2e of Fig. 4). The NC program checking means 23 is started in response to the analysis input signal, and the data to be sent to the CRT display means 21 are converted on the basis of the analytic data. After setting the converted data in the display data table 26, the CRT display means 21 is started (step 2f of Fig. 4). Then, the machining locus of the NC program is depicted on the CRT display means 21 (step 2g of Fig. 4). The operations of 2e to 2g of Fig. 4 are repeated for each block until the end of the machining program is reached.

Scale representation is performed in the above-described manner when depicting the machining locus of an NC program in the conventional manner, and as mentioned the length of the scale marker is fixed, i.e. it is a predetermined number of pixel elements on the display. The scale value associated the fixed length is displayed, but it is difficult to intuitively grasp the actual length of the workpiece or the machining path since the scale value generally works out to a number which is difficult to use (i.e. 23.456 in the illustrated example of Fig. 3). Furthermore, since no scale graduations are provided on the display, but only the actual coordinates, the dimensions of the workpiece configuration and distances between various points are difficult to figure out without using other means such as a ruler and a calculator.

## SUMMARY OF THE INVENTION

It is a primary object of the present invention to obviate the foregoing problems, by providing a method of displaying scale graduations which allows an operator to quickly and precisely determine the dimensions of an actual device or process being representatively displayed on a CRT unit or the like. As applied to an NC machine tool, the invention allows the operator to easily check the size and relative positions of sections of an actual machining locus as determined by an NC program. In this field of use, the method of the invention comprises the steps of checking the NC program by displaying the programmed machining path using a CRT display means; calculating a scale factor for the display, rounding the scale factor to one or two high-order digits or converting the scale factor to an easy-to-use value, and controlling the length of the scale marker to correspond to the rounded or truncated scale value when depicting the machining locus.

Another object of the invention is to provide a method of displaying scale graduations sized equivalently to the scale marker generated by the foregoing method.

BRIEF DESCRIPTION OF THE DRAWINGS

Fig. 1 is a block diagram illustrating a machining device using a numerical control unit of the prior art, employing a CRT display means;

Fig. 2 is a diagram of a representation on the CRT display means of Figure 1 when specifying a depictive range;

Fig. 3 is a diagram showing the depiction of the NC program on the prior art CRT display means;

Fig. 4 is a flowchart showing program control operations according to the foregoing prior art arrangement;

Fig. 5 is a block diagram illustrating a machining device employing a numeral control unit according to one embodiment of the present invention;

Fig. 6 is a diagram showing the depiction of the NC program on the CRT display means in one embodiment of the invention;

Fig. 7 is a flowchart showing program control operations used according to the invention;

Fig. 8 is a diagram showing an example where the coordinate values of the scale graduations are relative-coordinate-displayed; and

Fig. 9 is a diagram showing an example where the least coordinate values along X and Y axes of a machining locus are used to define a reference point for the scale graduations.

DESCRIPTION OF THE PREFERRED EMBODIMENTS

Illustrative embodiments of the present invention will hereinafter be described in conjunction with the accompanying drawings. The embodiments here chosen for an exposition of the invention involve NC controlled machine tools such as EDM systems and the like, although it should be understood that the invention is of general applicability in any system where it is desired to display an apparatus or process at an enlarged or reduced scale.

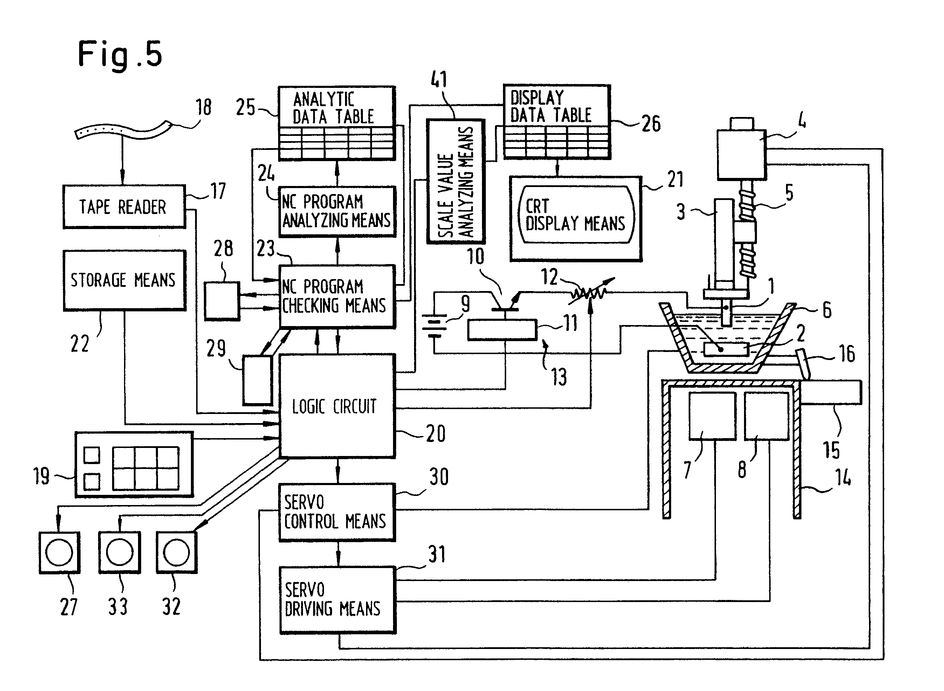

Turning first to Fig. 5, there is illustrated a block diagram of a numerical control unit for checking an NC program using a CRT display means 21 according to one embodiment of the invention. In Fig. 5, the same symbols as used in Fig. 1 indicate like components, and the description thereof will be partly omitted herein.

Referring to Fig. 5, a scale value analyzing means generally designated at 41 serves to determine an optimum scale value from the depictive range set by the logic circuit 20.

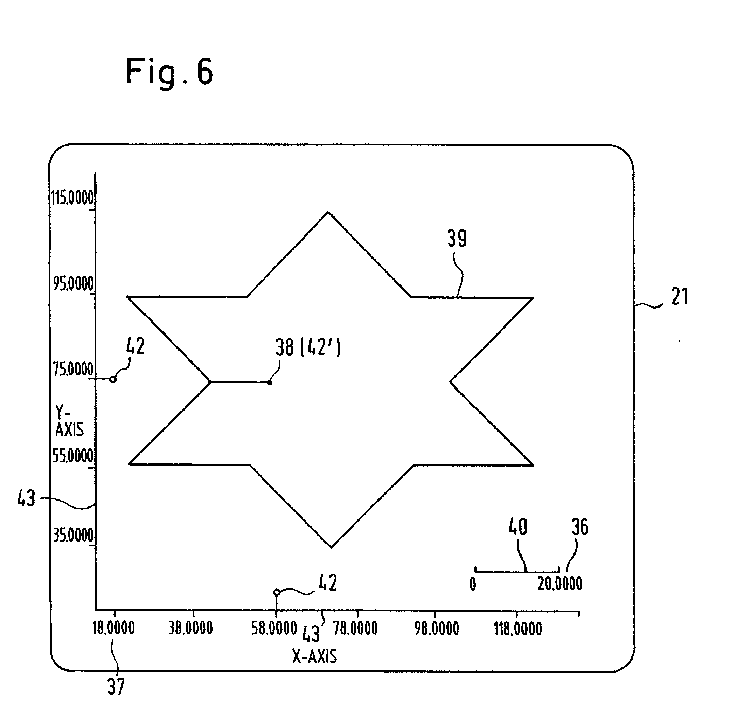

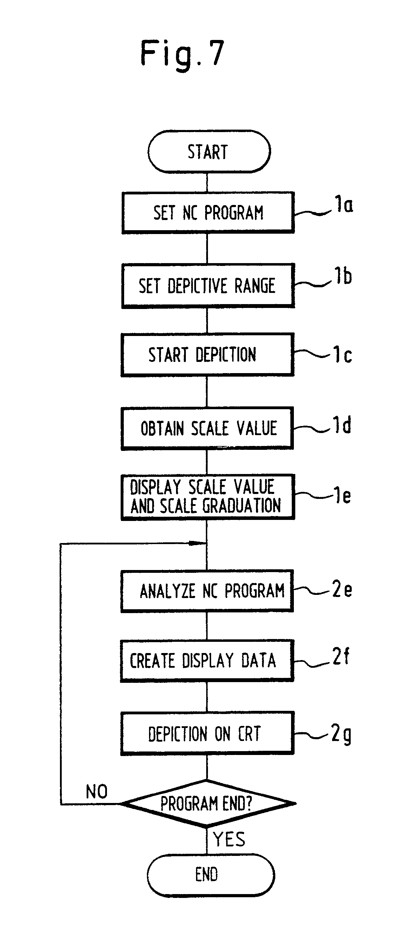

The description will focus on the operation of this device with reference to Figs. 5 and 6 as well as the flowchart of Fig. 7. Fig. 6 is a diagram in which the NC program is depicted by the CRT display means 21.

Throughout these Figures, the numeral 40 represents a scale marker having a length equivalent to one graduation; 36 is the scale value per graduation; at 42 are markers corresponding to a reference point 42'; at 43 are the scale graduations; at 37 are coordinate values; at 38 is the machining start point; and 39 is the machining locus.

When checking the NC program using the CRT display means 21, the NC program that the inspector wishes to examine is set in the logic circuit 20 (step 1a of Fig. 7). This program entry step is the same as in the conventional apparatus.

Subsequently, the depictive range is set in the logic circuit 20 (step 1b of Fig. 7). The range entry procedure is again the same as in the conventional apparatus. After setting both the NC program and the depictive range, the NC program is automatically checked upon depressing a depiction start key on input unit 19 (step 1c of Fig. 7).

That is, upon depression of the depiction start key, the scale value analyzing means 41 is started. Based on a calculation described below, there is obtained a scale value such that the digits of the scale value except one or two high-ordered digits become 0 (step 1d of Fig. 7).

Prior to the actual calculation of the appropriate size of the scale marker; the apparatus performs a conventional autoscaling routine so that the workpiece or the machining locus in its entirety will be appropriately displayed on the usable display area. This is performed by prereading the program to determine the maximum variation of the locus along the X-axis and the Y-axis. The greater of these variations will be used for subsequent processing to appropriately scale up or scale down the displayed image. For example, assume that the maximum X-axis variation on a particular workpiece machining locus is 5mm and that this variation is greater than the y-axis variation. Since the usable area for the display itself, although variable, may approach 50cm, it would be appropriate to scale up the locus for display. The conventional autoscaling technique will select a scale appropriate to the usable display area.

The maximum X-axis variation will correspond to a certain number of pixels (CRT picture elements) on the display screen. According to the invention, this number of pixels is divided by the maximum X-axis variation to determine the actual distance represented on the CRT by the illumination of one pixel. A typical CRT display is composed of 640×400 pixels. In a typical case, the conventional autoscaling technique might scale up the 5mm maximum X-axis variation to correspond to 400 pixels. In this example, therefore, the actual X-axis distance represented by one pixel would be 0.125 mm. If the scale marker were of a fixed length, for example 50 pixels, the marker would correspond in this example to a 0.625 mm distance on the actual workpiece, a rather difficult value to use in determining actual distances along the workpiece when looking at the display. Conventionally, the 0.625mm value would be displayed on the CRT next to the fixed length scale marker.

According to the invention, the value of 0.625 mm would be truncated or rounded as desired to either 0.6 or 0.63 mm, and the number of illuminated pixels of the scale marker would be proportionately changed. For example, in the example above where 50 pixels corresponds to 0.625 mm in actual workpiece length, 0.6 mm would correspond to 48 pixels (with rounding) by the relation:

$$\frac{X}{50} = \frac{.6}{.625}$$

Thus, in this example of the invention, 48 pixels would be illuminated to depict the scale marker 40, and 0.6 mm would be displayed as the scale value 36. The graduations 43 displayed on the CRT would each be of 48 pixel separation and would represent a distance of 0.6mm.

However, even the value of 0.6 may be difficult to use in practice, as most people are used to dealing with graduations in units of 1, 2, 5 or 10, for example, but not other numbers. Therefore, according to an alternative embodiment of the invention, conversions are made so that the size of the scale marker and thus the graduations are limited to 1, 2, 5 or 10 units (or factors or divisors of 10, 100, *etc.* thereof). That is, the scale value is limited to numbers having only one non-zero digit, with the digit being limited to a 1, 2 or 5. This conversion or "rounding" may be performed in any desired fashion, but according to a preferred arrangement it is done by converting any value which rounds to 1, to 1; converting any value which rounds to 2 or 3 to 2, converting any value that rounds to 4, 5, 6 or 7 to 5; and by rounding up any value which rounds to 8, 9 or 10 to 10. Using the values of the previous example, 0.625 would be converted to 0.5, and the scale marker 40 would be adjusted in size to span 40 pixels, as given by the relation:

$$\frac{X}{50} = \frac{.5}{.625}$$

The graduations 43 would each be of 40 pixel separation and would each represent a distance of 0.5 mm.

Based on the scale values obtained in the operation shown in 1d of Fig. 7, explained in detail above, both the scale of one graduation and the scale values per graduation are displayed, and at the same time the scale graduations 43 and the coordinate values 37 are displayed with the machining start point 38 used as a reference point 42', *i.e.*, with markers 42 serving as start points for the graduations. The operations of steps 2e through 2g in Fig. 7 are repeatedly performed as in the conventional case until reaching the program end.

In NC machine tools of the type described, it is common to provide the operator with display controls which enable the operator to select certain portions of the displayed locus for display at an enlarged magnification. The magnification factor is generally not fixed or limited to whole number factors, although the length-to-width ratio of the display portions which may be selected is generally fixed. In the case of displaying the locus at an increased magnification, the scale is naturally magnified as well, and the scale value will be proportionally affected. In such a case, it will generally be necessary to re-round the resulting new scale value, and recalculate the length of the scale marker correspondingly.

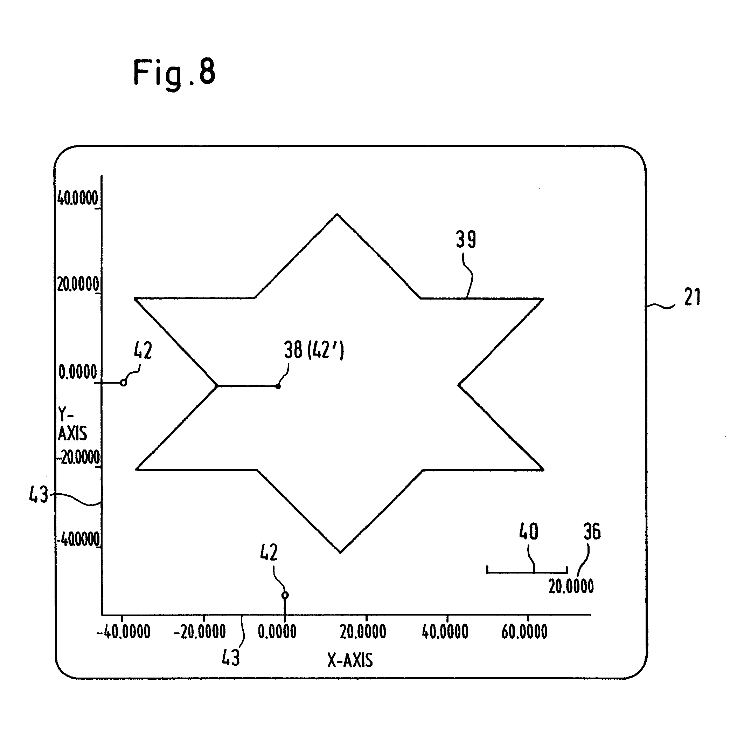

In the embodiment described above, the coordinate values 37 of the scale graduations are displayed in absolute coordinates, but may, as illustrated in Fig. 8, also be displayed in relative coordinates, by defining reference point 42' as the origin (0,0). The absolute coordinate display or the relative coordinate display may be operator-selected. In either case, the same effects as in the foregoing embodiment can be obtained.

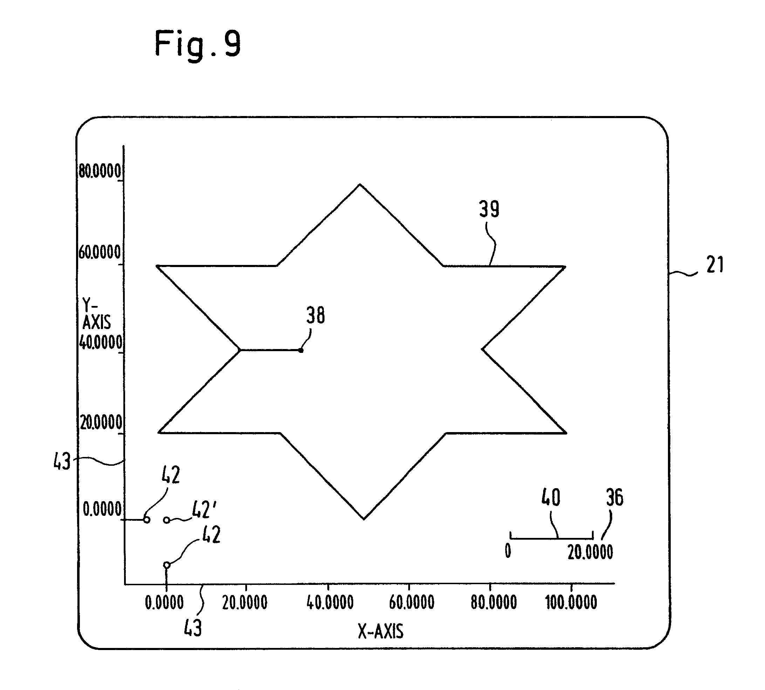

In accordance with the above-described embodiments, the reference point 42' of the scale graduations is the machining start point 38. As shown in Fig. 9, however, the least coordinate values along the X, and Y axes of the machining locus may be set as the reference point 42' and as the origin (0,0) in effecting scale graduation representation. In this case, the same effects can again be obtained.

The foregoing embodiment has dealt with CRT display means. However, graphic representations associated with liquid crystal and plasma displays may be used, also exhibiting the same effects as in the foregoing embodiment.

In the explanation of the foregoing embodiment, an NC machine tool is used as one example of an apparatus to which the invention may be applied. It is, however, obvious that the present invention can be applied to other apparatus using similar display means, *e.g.*, laser machining devices, lathes and other mechanical machining devices, CAD and CAM systems, video games, and indeed anywhere that display scaling techniques are employed.

As discussed above, according to the present invention, the scale values relative to the machining locus are displayed on the display means, with the scale values truncated to one or two high-order digits or set at a convenient round number. This arrangement has the beneficial effect of permitting the size and position of the machining locus to be recognized and observed with facility. Further, it is possible to quickly and accurately check the NC program using the display device.

With the present invention, scale graduations relative to the machining locus are displayed and may be located on the basis of an arbitrary reference point. This arrangement presents additional desirable effects for simplifying the readability of the displayed information.

## Claims

1. A method of improving the readability of scaled displays, comprising;

   (a) prereading a program which defines a locus of points;

   (b) calculating a scale at which the locus of points is to be displayed on a display device;

   (c) generating a scale marker which encompasses a selectible number of pixels of said display device; and

   (d) controlling the number of said pixels and thus the size of said scale marker such that the parameter represented by said scale marker is a round number.

2. A method as claimed in claim 1, wherein said controlling step is performed such that the parameter represented by said scale marker may be expressed by a number having a single non-zero digit.

3. A method as claimed in claim 2, wherein said single non-zero digit is limited to one of 1, 2 and 5.

4. A method as claimed in claim 1, wherein said parameter is distance.

5. A method as claimed in claim 1, further comprising the step of displaying vertical and horizontal axes together with said locus of points, and displaying graduation indications along at least one of said axes with the separation between adjacent graduations being equal to a dimension of said scale marker.

6. A method as claimed in claim 1, wherein said locus of points constitutes a representation of a physical article or process, and wherein said locus is displayed on said display device at a reduced or enlarged scale as compared with the physical article or process.

7. A method of improving the readability of scaled displays, comprising;

   (a) generating a locus of points for display;

   (b) calculating a scale at which the locus of points is to be displayed on a display device;

   (c) generating a scale marker which encompasses a selectible number of pixels of said display device;

   (d) controlling the number of said pixels and thus the size of said scale marker such that the parameter represented by said scale marker is a round number; and

   (e) displaying said locus of points together with said scale marker on said display device.

8. A method of improving the readability of displays associated with NC machine tools, comprising;

   (a) prereading a machining program;

   (b) determining a scale at which a locus of points defined by said program will be displayed;

   (c) displaying said locus of points on a display device;

   (d) displaying, alongside said locus, at least one scale marker whose length indicates a unit of distance along the actual workpiece being machined; and

   (e) adjusting the length of said scale marker so that said unit of distance can be expressed by a number having no more than two non-zero digits.

9. A method as claimed in claim 8, wherein said no more than two non-zero digits comprises a single non-zero digit limited to one of 1, 2 and 5.

10. A method as claimed in claim 8, further comprising the step of displaying vertical and horizontal axes together with said locus of points, and displaying graduation indications along at least one of said axes with the separation between adjacent graduations being equal to the length dimension of said scale marker.

11. A method as claimed in claim 10, further comprising the step of displaying coordinate values at various ones of said graduations, and wherein an origin of the coordinate plane and a reference point for said graduations are set at a selectable point or points within or without the area of said display.

Fig.1

EP 0 440 904 A1

ANALYTIC DATA TABLE — 25

DISPLAY DATA TABLE — 26

TAPE READER — 17

NC PROGRAM ANALYZING MEANS — 24

CRT DISPLAY MEANS — 21

STORAGE MEANS

NC PROGRAM CHECKING MEANS — 23

28

22

29

LOGIC CIRCUIT — 20

9  10  11  13  12

1  3  4  5  6  2  16

19

SERVO CONTROL MEANS — 30

7  8  15  14

27  33  32

SERVO DRIVING MEANS — 31

18

Fig.2

X-AXIS

Y-AXIS

21

34

35

Fig.3

EP 0 440 904 A1

# Fig.4

```
        ( START )
           │
  ┌─────────────────────┐
  │   SET NC PROGRAM     │── 2a
  └─────────────────────┘
           │
  ┌─────────────────────┐
  │  SET DEPICTIVE RANGE │── 2b
  └─────────────────────┘
           │
  ┌─────────────────────┐
  │   START DEPICTION    │── 2c
  └─────────────────────┘
           │
  ┌─────────────────────┐
  │ DISPLAY SCALE VALUE  │── 2d
  └─────────────────────┘
           │
  ┌─────────────────────┐
  │  ANALYZE NC PROGRAM  │── 2e
  └─────────────────────┘
           │
  ┌─────────────────────┐
  │  CREATE DISPLAY DATA │── 2f
  └─────────────────────┘
           │
  ┌─────────────────────┐
  │   DEPICTION ON CRT   │── 2g
  └─────────────────────┘
           │
    NO  ◇ PROGRAM END? ◇
           │ YES
        (  END  )
```

# Fig.5

EP 0 440 904 A1

Fig.6

EP 0 440 904 A1

# Fig.7

```
        ┌─────────┐
        │  START  │
        └─────────┘
             │
   ┌──────────────────────┐
   │    SET NC PROGRAM     │──── 1a
   └──────────────────────┘
             │
   ┌──────────────────────┐
   │  SET DEPICTIVE RANGE  │──── 1b
   └──────────────────────┘
             │
   ┌──────────────────────┐
   │    START DEPICTION    │──── 1c
   └──────────────────────┘
             │
   ┌──────────────────────┐
   │   OBTAIN SCALE VALUE  │──── 1d
   └──────────────────────┘
             │
   ┌──────────────────────┐
   │  DISPLAY SCALE VALUE  │──── 1e
   │ AND SCALE GRADUATION  │
   └──────────────────────┘
             │
             ▼
   ┌──────────────────────┐
   │   ANALYZE NC PROGRAM  │──── 2e
   └──────────────────────┘
             │
   ┌──────────────────────┐
   │   CREATE DISPLAY DATA │──── 2f
   └──────────────────────┘
             │
   ┌──────────────────────┐
   │    DEPICTION ON CRT   │──── 2g
   └──────────────────────┘
             │
      NO    ◇───────────◇
   ┌────── PROGRAM END?
   │       ◇───────────◇
   │          │ YES
   │       ┌─────────┐
   │       │   END   │
           └─────────┘
```

Fig.8

EP 0 440 904 A1

Fig.9

EP 0 440 904 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 188 619   (FANUC LTD.)<br>* page 7, line 11 - page 11, line 21 * * figures 2, 3 *<br>— — — | 1,7,8 | G 05 B 19/405 |
| A | PATENT ABSTRACTS OF JAPAN vol. 10, no. 147 (P-460)(2204) 29 May 1986,<br>& JP-A-61 811 (MITSUBISHI DENKI K.K.) 06 January 1986,<br>* the whole document *<br>— — — | 1-4,6-9 | |
| D,A | PATENT ABSTRACTS OF JAPAN vol. 010, no. 299 (M-524) 11 October 1986,<br>& JP-A-61 111854 (MITSUBISHI ELECTRIC CORP.) 29 May 1986,<br>* the whole document *<br>— — — — — | 1,7,8 | |

TECHNICAL FIELDS
SEARCHED (Int. Cl.5)

G 05 B

The present search report has been drawn up for all claims

| Place of search | Date of completion of search | Examiner |
|---|---|---|
| The Hague | 17 May 91 | NETTESHEIM J.F. |